# FASCICULE DE BREVET EUROPEEN

(11) **EP 0 750 442 B1**
(45) Date de publication et mention de la délivrance du brevet: **13.10.2004**
(21) Numéro de dépôt: 96401322.1
(22) Date de dépôt: 18.06.1996
(51) Int. Cl.: H04Q 11/04

(54) **Procédé et système pour la commutation intégrale de traffic commuté en mode circuit et de trafic commuté en mode paquet**
Methode und System für die integrale Vermittlung von leitungsvermitteltem und paketvermitteltem Verkehr
Method and system for integrated switching of circuit-switched and packet-switched traffic

(30) Priorité: 19.06.1995 FR 9507299
(43) Date de publication de la demande: 27.12.1996
(73) Titulaire: ALCATEL, 75382 Paris Cédex 08 (FR)
(72) Inventeur: Dieudonne, Marc, 91430 Igny (FR); Glon, Jean-Pierre, 78380 Bougival (FR)
(74) Mandataire: Sciaux, Edmond

(56) Documents cités:
- EP-A- 0 276 349
- IEEE JOURNAL ON SELECTED AREAS IN COMMUNICATIONS, FEB. 1993, USA, vol. 11, no. 2, ISSN 0733-8716, pages 254-263, XP000377943 MOORS T ET AL: "ATM receiver implementation issues"
- ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, vol. 1, 23 Avril 1995, VERBAND DEUTSCHER ELEKTROTECHNIKER (VDE) ET AL, pages 62-66, XP000495539 GARD I ET AL: "SUPPORTING STM TRAFFIC WITH ATM - A SWITCH IMPLEMENTATION"
- ELECTRONICS AND COMMUNICATIONS IN JAPAN, PART 1 (COMMUNICATIONS), JUNE 1994, USA, vol. 77, no. 6, ISSN 8756-6621, pages 1-15, XP000476161 UEDA H ET AL: "SDH signal transfer method based on ATM techniques"

## Description

L'invention concerne un procédé de multiplexage dans un réseau de télécommunication à mode de transfert asynchrone, et un noeud de commutation mettant en oeuvre ce procédé. Les futurs réseaux numériques à intégration de services et à large bande reposeront sur un mode de transfert asynchrone, dit ATM. Ce mode de transfert asynchrone a été normalisé par le CCITT : Les informations sont transportées dans des paquets appelés cellules, comportant une en-tête et une charge utile, de longueur fixée. La voie logique supportée par une cellule, entre deux noeuds du réseau, est identifiée par un identificateur de faisceau virtuel et un identificateur de circuit virtuel, contenus dans l'entête de chaque cellule. Par conséquent, une source peut émettre des cellules à son rythme propre, sans référence directe avec le réseau auquel cette source est reliée. Ces cellules peuvent supporter tous les types de service, en ne demandant qu'un seul type de commutation dans le réseau : La commutation de cellules ATM.

L'article IEEE Journal on Selected Areas in communications, vol 11(1993) February, N°2, New York USA, ISSN 0733-8716, pages 254-263, XP000377943, MOORS T ET AL, « ATM Receiver Implementation Issues », décrit un procédé de transmission de données dans un réseau ATM, consistant à segmenter tout paquet de données ayant une longueur supérieure à la capacité de transport d'une cellule ATM, pour transporter ce paquet au moyen de plusieurs cellues ; et ensuite ré-assembler les segments pour reconstituer le paquet.

Cependant les cellules normalisées ne sont pas parfaitement bien adaptées pour tous les services. Les services de téléphonie à bande étroite sont supportés actuellement par un réseau dit synchrone établissant des circuits numériques synchrones. Les échantillons de 30 signaux téléphoniques sont transmis regroupés en trames récurrentes, chaque trame étant découpée en intervalles de temps dont 30 sont attribués respectivement aux 30 circuits téléphoniques. Au moins pendant une phase de développement des réseaux à mode de transfert asynchrone, les réseaux synchrones continueront à exister et seront même utilisés comme réseaux de distribution pour des circuits téléphoniques en mode synchrone qui seront supportés par des cellules pour la plus grande partie du trajet. Il a donc été nécessaire d'organiser la coexistence de ces types de réseau.

La demande de brevet européen n° **0 609 137** décrit un dispositif de cellulisation et un dispositif de décellulisation de voies numériques synchrones permettant de commuter un très grand nombre de circuits synchrones avec un réseau de commutation de type ATM. Ce dispositif de cellulisation place dans une même cellule, support d'une voie logique, des échantillons représentant respectivement les signaux d'une pluralité de circuits synchrones différents, susceptibles d'être supportés par cette voie logique. Ce dispositif de cellulisation ne perd donc pas de temps pour attendre plusieurs échantillons successifs d'un même circuit pour remplir efficacement des cellules. Il respecte ainsi l'avis Q551 du CCITT qui limite à une milliseconde le délai de traversée aller-retour dans un réseau synchrone. Ces cellules sont dites composites.

La demande de brevet français n° **2 725 095** décrit un dispositif de commutation des échantillons contenus dans des cellules composites; et un noeud d'accès, à un réseau de commutation à mode de transfert asynchrone, comportant de tels dispositifs de commutation des échantillons contenus dans des cellules composites.

Un réseau de commutation est constitué classiquement de plusieurs étages de matrices de commutation, la structure de ces étages étant optimisée afin d'obtenir une probabilité de blocage donnée, pour un trafic donné, pour un nombre d'entrées donné, et pour une longueur de cellules qui est fixée dans la norme du CCITT. Des calculs classiques permettent de choisir entre plusieurs structures, plus ou moins optimales. Pour obtenir une structure encore plus optimale, il faudrait avoir la liberté de choix de la longueur des cellules, mais cela n'est pas possible, puisqu'elle est normalisée.

Les cellules ATM sont capables d'assurer notamment un service de transmission de données, pourvu que les données à transporter soient groupées en paquets ayant une longueur correspondant à la longueur de la charge utile d'une cellule. Dans le cas où la source des données a un faible débit et émet donc des micropaquets de données, il est souvent impossible d'attendre plusieurs micropaquets successifs provenant de la même source pour remplir efficacement chaque cellule.

Un but de l'invention est de proposer un procédé de multiplexage permettant de transmettre notamment des micropaquets de données dans des cellules ATM normalisées, tout en remplissant efficacement ces cellules.

Un premier objet de l'invention est un procédé de multiplexage dans un réseau de télécommunication à mode de transfert asynchrone, pour multiplexer temporellement des informations dans des cellules à mode de transfert asynchrone et à longueur fixe, chaque cellule comportant :
- une en-tête contenant notamment un identificateur de faisceau virtuel et un identificateur de circuit virtuel qui définissent une voie logique entre deux noeuds dudit réseau;
- et une charge utile constituée d'une quantité fixe d'information ;
consistant, avant de router des informations dans ce noeud, à placer comme charge utile dans une suite de cellules supportant une même voie logique, une suite d'entités logiques appelées conteneurs d'information supportant cette même voie logique, chaque conteneur comportant une charge utile qui est une quantité d'information supérieure à celle de la charge utile de chaque cellule, la quantité d'information transportée par chaque conteneur étant choisie telle que l'utilisation de ce noeud est plus efficace ;
**caractérisé** en ce que pour transmettre des données ayant des destinations différentes, il consiste à placer dans une suite de conteneurs supportant une voie logique donnée, une pluralité de paquets de données, chaque paquet comportant une étiquette qui contient une référence logique permettant d'acheminer indépendamment chaque paquet,et la longueur de ce paquet.

Le procédé ainsi caractérisé permet de mieux optimiser l'utilisation de chaque noeud de commutation ATM, en utilisant pour chaque noeud, une longueur de conteneur optimale pour ce noeud. Cette longueur est choisie une fois pour toutes, en fonction des caractéristiques statistiques du trafic, ou bien est variable en fonction des caractéristiques courantes du trafic. D'autre part, il permet d'optimiser l'utilisations des cellules en permettant de transporter simultanément des micropaquets de données (de longueur inférieure à la charge utile d'une cellule) et des échantillons de circuit dans une même cellule, grâce au fait que chaque échantillon de circuit est repérable par sa position, sa longueur étant fixe et connue, et chaque micropaquet de données étant repérable par une étiquette qui indique en outre sa longueur.

Un deuxième objet de l'invention est un noeud de commutation, mettant en oeuvre ce procédé, et comportant :
- un premier étage comportant au moins une matrice de commutation dite auxiliaire pour regrouper dans une même entité logique, appelée conteneur, des informations reçues par ce noeud et contenues dans différentes cellules, ces informations comportant des paquets de données pouvant être acheminées par un même chemin pendant au moins une partie de leur acheminement dans ledit noeud ; chaque conteneur étant transporté par une pluralité de cellules supportant une même voie logique et transportant une quantité d'information supérieure à celle de la charge utile de chaque cellule, la quantité d'information transportée par chaque conteneur étant choisie telle que l'utilisation de ce noeud est plus efficace ;
- au moins un étage intermédiaire classique de commutation de cellules, ayant des entrées couplées à des sorties du premier étage;
- un dernier étage comportant au moins une matrice de commutation dite auxiliaire pour placer dans des cellules distinctes supportant respectivement des voies logiques distinctes, des informations qui ont été transportées dans une même cellule, parce qu'elles avaient été regroupées dans un même conteneur ;
**caractérisé** en ce qu'il comporte au moins une matrice auxiliaire de commutation comportant :
- une première mémoire de marquage, dédiée au routage de paquets de données, contenant des informations de routage comportant une identité repérant l'une des sorties de la matrice auxiliaire, et contenant une nouvelle étiquette, pour chaque micropaquet de données;
- et un premier commutateur spatial, commandé en fonction de données de routage mémorisées dans la première mémoire de marquage pour placer des paquets de données dans une cellule, en associant à chaque paquet de données respectivement une nouvelle étiquette fournie par la première mémoire de marquage, et pour fournir cette cellule à une sortie de cette matrice auxiliaire, cette sortie étant repèrée par une identité fournie par la première mémoire de marquage.

Un troisième objet de l'invention est un noeud de commutation , mettant en oeuvre ce procédé, et comportant :
- un réseau principal de commutation de cellules, ayant des entrées principales constituant les entrées dudit noeud, et des sorties principales constituant les sorties dudit noeud;
- et au moins un réseau auxiliaire de commutation de cellules, ayant des entrées reliées respectivement à des sorties auxiliaires du réseau principal, et des sorties reliées respectivement à des entrées auxiliaires du réseau principal, pour :
   -- regrouper dans une même entité logique appelée conteneur et ayant une capacité supérieure à la charge utile d'une cellule, des informations contenues dans différentes cellules, ces informations comportant des paquets de données et pouvant être acheminées par un même chemin pendant au moins une partie de leur acheminement dans ledit noeud, et chaque conteneur étant transporté par une pluralité de cellules supportant une même voie logique ;
   -- et placer dans des cellules distinctes supportant respectivement des voies logiques distinctes, des informations qui ont été transportées dans une même cellule, parce qu'elle avaient été regroupées dans un même conteneur ;
**caractérisé** en ce qu'il comporte au moins une matrice auxiliaire de commutation comportant :
- une première mémoire de marquage, dédiée au routage de paquets de données, contenant des informations de routage comportant une identité repérant l'une des sorties de la matrice auxiliaire, et contenant une nouvelle étiquette, pour chaque micropaquet de données;
- et un premier commutateur spatial, commandé en fonction de données de routage mémorisées dans la première mémoire de marquage pour placer des paquets de données dans une cellule, en associant à chaque paquet de données respectivement une nouvelle étiquette fournie par la première mémoire de marquage, et pour fournir cette cellule à une sortie de cette matrice auxiliaire, cette sortie étant repèrée par une identité fournie par la première mémoire de marquage.

L'invention sera mieux comprise et d'autres caractéristiques apparaîtront à l'aide de la description ci-dessous et des figures l'accompagnant :
- la figure 1 représente schématiquement une suite de conteneurs d'information placés dans une suite de cellules, ces conteneurs n'ayant pas une longueur égale à un multiple entier de la longueur d'une cellule;
- les figures 2 et 3 illustrent un exemple particulier de conteneurs ayant chacun une longueur égale à deux fois la longueur d'une cellule normalisée;
- la figure 4 représente le schéma synoptique d'un premier mode de réalisation du noeud de commutation selon l'invention;
- la figure 5 représente le schéma synoptique d'un second mode de réalisation du noeud de commutation selon l'invention;
- la figure 6 représente une matrice de commutation qui est utilisable dans ces deux modes de réalisation.

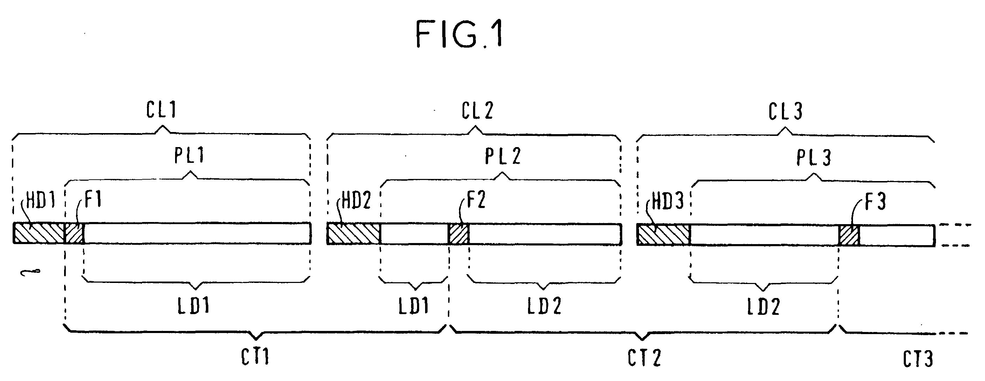

La figure 1 illustre le procédé de multiplexage selon l'invention, par un exemple dans lequel chaque conteneur a une longueur fixée qui est comprise entre une fois et deux fois la longueur d'une cellule. Dans cet exemple, une suite de trois conteneurs CT1, CT2, CT3 est supportée par une suite de cellules CL1, CL2, CL3, etc. Ces cellules ont chacune une en-tête, respectivement HD1, HD2, HD3, contenant un identificateur de faisceau virtuel et un identificateur de circuit virtuel. Les identificateurs de faisceau virtuel de ces cellules CL1, etc identifient tous une même voie. Les identificateurs de circuit virtuel peuvent différer d'une cellule à une autre. Chacune de ces cellules comporte en outre une charge utile, respectivement PL1, PL2, PL3, ....

Le conteneur CT1 est à cheval sur les cellules CL1 et CL2. Il comporte une charge LD1 qui est scindée en deux parties, et il comporte à son début un drapeau F1 constitué d'un motif fixé. Le drapeau F1 et une première partie de la charge utile LD1 occupent tout le champ destiné à la charge utile PL1 de la cellule CL1. Une seconde partie de la charge utile LD1 occupe une partie du champ destiné à la charge utile PL2 de la cellule CL2. Dans cet exemple, le drapeau F1 suit immédiatement l'en-tête HD1 de la cellule CL1, mais ce n'est pas vrai en général, puisque la longueur des conteneurs n'est pas un multiple entier de la longueur de chaque cellule.

Le conteneur CT2 comporte un drapeau F2 constitué du même motif que le drapeau F1, et qui suit la seconde partie de la charge utile LD1, dans la cellule CL2. Le drapeau F2 est suivi par une première partie de la charge utile LD2, celle-ci étant scindée en deux parties. Une seconde partie de la charge utile LD2 est placée après l'en-tête HD3 dans la cellule CL3. Le conteneur CT3 est placé après la seconde partie de la charge utile LD2 dans la cellule CL3. Il commence par un drapeau F3 identique aux drapeaux F1 et F2.

Dans cet exemple, la longueur de chaque conteneur CT1, CT2, CT3, ..., est fixée. Elle est la même pour toutes les entrées d'un noeud de commutation donné. Elle est déterminée en fonction du trafic que ce noeud recevra statistiquement. Si ces conteneurs ne supportent que des circuits, des procédés de calculs classiques permettent de déterminer la longueur optimale des conteneurs, pour un trafic connu statistiquement et pour une probabilité de blocage donnée. Si les conteneurs doivent supporter des micropaquets de données, ou bien un mélange de micropaquets de données et de circuits téléphoniques, l'optimisation de la taille des conteneurs peut être réalisée par une simulation.

Selon une variante de mise en oeuvre, la longueur des conteneurs, pour une même entrée d'un noeud de commutation, peut varier au cours du temps. Des primitives d'un protocole de changement de longueur de conteneur sont transmises dans la charge utile d'un conteneur, avant de procéder à un changement de longueur.

Selon une autre variante de réalisation, les conteneurs ne comportent pas de drapeaux, mais comportent un mot de code de détection d'erreur, analogue à celui utilisé dans l'en-tête des cellules ATM normalisées. Ce mot de code est calculé selon un algorithme normalisé, appliqué aux bits de l'en-tête. Il permet de détecter une erreur de transmission portant sur l'en-tête. Ce mot de code permet en outre de détecter le début de chaque cellule. Un procédé connu pour détecter le début et la fin de chaque cellule dans une suite continue de cellules normalisées consiste à :
- calculer, au fil de l'eau, un mot de code, selon cet algorithme normalisé :
- à prélever dans la suite des bits reçus un mot constitué du même nombre de bits que le mot de code;
- à comparer le mot de code calculé avec les bits reçus, et à conclure que l'en-tête d'une cellule est détectée lorsque le mode de code calculé est identique à un mot prélevé au fil de l'eau.

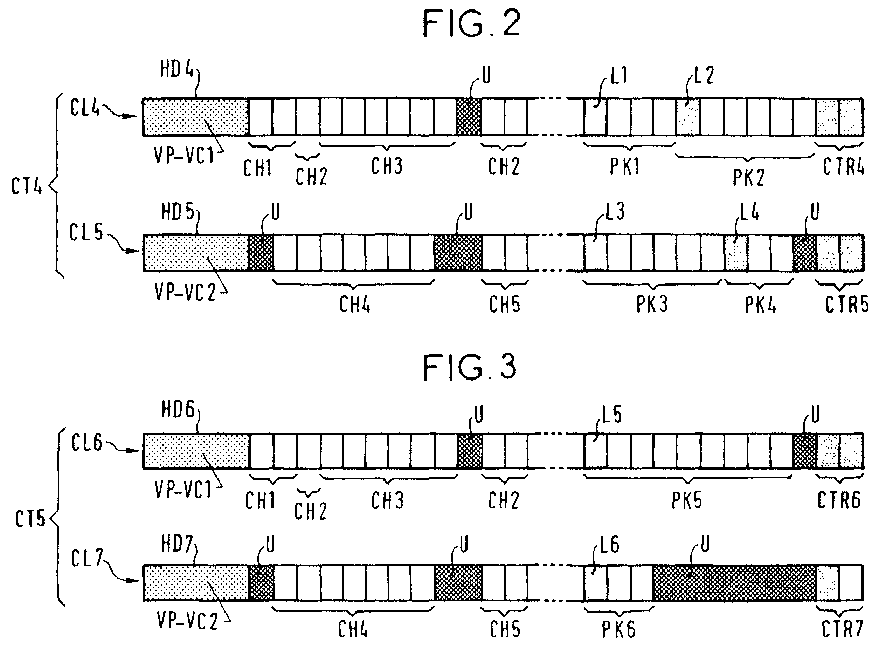

Les figures 2 et 3 représentent plus en détails deux conteneurs CT4 et CT5 respectivement, dans un exemple où chaque conteneur a une longueur exactement égale à deux fois la longueur d'une cellule, et transporte à la fois des échantillons de circuits téléphoniques, et des micropaquets de données. Dans cet exemple, les données sont en micropaquets ayant chacun une longueur inférieure à celle de la charge utile transportable dans une cellule, ce qui permet de transporter en outre des échantillons de circuit dans la même cellule.

Sur la figure 2, le conteneur CT4 est supporté par une cellule CL4 et une cellule CL5 ayant respectivement des en-têtes HD4 et HD5. Ces en-têtes comportent un même identificateur de faisceau virtuel VP, mais des identificateurs de circuit virtuel, VC1 et VC2 respectivement, qui sont différents. Sur ces figures, les champs référencés U sont des champs vides. Dans cet exemple, la cellule CL4 transporte : un échantillon d'un circuit téléphonique CH1; un échantillon d'un circuit téléphonique CH2 qui est découpé en deux parties pour utiliser deux champs disponibles mais non connexes; un échantillon d'un circuit téléphonique CH3 ; un micropaquet de données PK1; et un micropaquet de données PK2 ; et deux octets de contrôle CTR4 permettant de détecter des erreurs sur la charge utile de la cellule CL4.

Dans cet exemple, il n'y a pas besoin de drapeau pour identifier le début de chaque conteneur, le début étant identifiable tout simplement par l'en-tête d'une cellule sur deux.

La cellule CL5 comporte : un échantillon d'un circuit téléphonique CH4, un échantillon d'un circuit téléphonique CH5, un micropaquet de données PK3 ; un micropaquet de données PK4 ; et deux octets de contrôle CTR5, pour détecter des erreurs portant sur des informations transmises dans la charge utile de la cellule CL5. Chaque micropaquet comporte une étiquette, respectivement L1, L2, L3, L4 constituée d'une référence logique permettant d'acheminer indépendamment chaque micropaquet, et d'une information de longueur permettant de délimiter précisément la fin du micropaquet.

La figure 3 représente le conteneur CT5 qui suit le conteneur CT4. Il est supporté par deux cellules successives CL6 et CL7 ayant respectivement des en-têtes HD6 et HD7. Ces en-têtes comportent le même identificateur de faisceau virtuel, VP, et respectivement des identificateurs de circuit virtuel, VC1 et VC2, différents.

Cette figure 3 montre que les conteneurs CT4 et CT5, respectivement pour chaque circuit virtuel, ont une structure identique pour ce qui concerne les circuits téléphoniques et aussi longtemps que ces circuits restent établis, et ont une structure variable pour ce qui concerne les micropaquets de données.

La cellule CL6 transporte des échantillons des circuits téléphoniques CH1, CH2, CH3, dans des positions identiques à celles qui étaient occupées par les échantillons de ces circuits dans la cellule CL4. De même, la cellule CL7 transporte des échantillons des circuits téléphoniques CH4 et CH5 à des emplacements qui sont identiques à ceux occupés par les échantillons de ces circuits dans la cellule CL5. Par contre, la cellule CL6 transporte un micropaquet de données PK5, ayant une étiquette L5, mais n'ayant pas forcément la même longueur ni la même position que les micropaquets PK1 et PK2 dans la cellule CL4.

Elle transporte en outre un mot de contrôle CTR6 qui est fonction de l'ensemble de la charge utile transportée par la cellule CL6.

De même, la cellule CL7 transporte un micropaquet PK6 qui n'a pas la même longueur ni la même position que les micropaquets PK3 et PK4 qui étaient transportés par la cellule CL5. La cellule CL7 transporte en outre un mot de contrôle CTR7 qui est calculé sur l'ensemble de la charge utile transportée par la cellule CL7.

Dans d'autres exemples de mise en oeuvre, la position des échantillons d'un circuit donné peut varier au cours du temps, pour optimiser le remplissage des cellules. Des primitives d'un protocole de changement de position des échantillons sont alors transportées dans des conteneurs.

Dans cet exemple les paquets de données à transmettre sont des micropaquets de longueur très inférieure à la longueur d'une cellule, mais ils pourraient aussi bien être des paquets de données ayant une longueur supérieure à la charge utile d'une cellule, par exemple 1,5 fois la longueur d'une cellule, en répartissant un tel paquet en partie sur une première cellule et en partie sur une seconde cellule constituant un même conteneur.

Selon un mode de réalisation préférentiel, tous les échantillons de circuit sont regroupés dans une première partie du conteneur, et tous les micropaquets sont regroupés dans la seconde partie. La position de la frontière entre ces deux parties du conteneur est alors l'une des informations définissant la structure de ce conteneur, et qui sont transmises par des circuits de signalisation. Ces informations sont constituées aussi par la position des échantillons de chaque circuit dans le conteneur, cette position pouvant être fixée pour toute la durée de ce circuit, ou bien pouvant être variable.

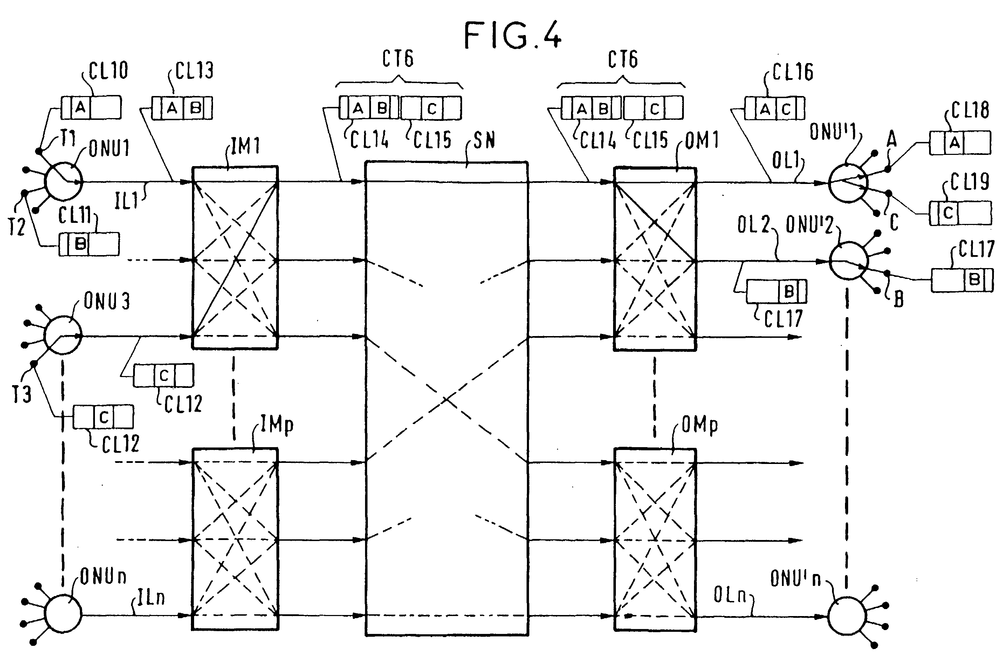

La figure 4 représente un premier mode de réalisation du noeud de commutation selon l'invention. Ce mode de réalisation comporte :
- n liaisons d'entrées IL1,...,ILn reliées respectivement à n terminaux de réseau optique ONU1,...,ONUn (Optical Network Unit en anglais), et n liaisons de sortie OL1,...,OLn reliées respectivement à n terminaux de réseau optique ONU'1,...,ONU'n, chacun de ces terminaux de réseau optique étant relié à un ou plusieurs terminaux d'usager, représentés par des points sur la figure;
- p matrices d'entrée IM1,...,IMp, ayant chacune trois entrées et trois sorties, dans cet exemple qui est très simplifié;
- p matrices de sorties OM1,...,OMp, ayant chacune trois entrées et trois sorties, dans cet exemple qui est très simplifié;
- un réseau de commutation ATM classique, référencé SN, constitué d'une pluralité d'étages non représentés, comportant n entrées et n sorties.

Chacun des terminaux de réseau optique ONU1,...,ONUn a une sortie qui est reliée à une entrée de l'une des matrices d'entrée IM1,...,IMp. Chacun des terminaux de réseau optique ONU'1, ..., ONU'n a une entrée reliée à une sortie de l'une des matrices de sortie OM1,...,OMp. Chaque sortie de chaque matrice d'entrée IM1,...,IMp est reliée à une entrée du réseau de commutation SN. Chaque sortie de ce réseau SN est reliée à une entrée de l'une des matrices de sortie OM1,...,OMp.

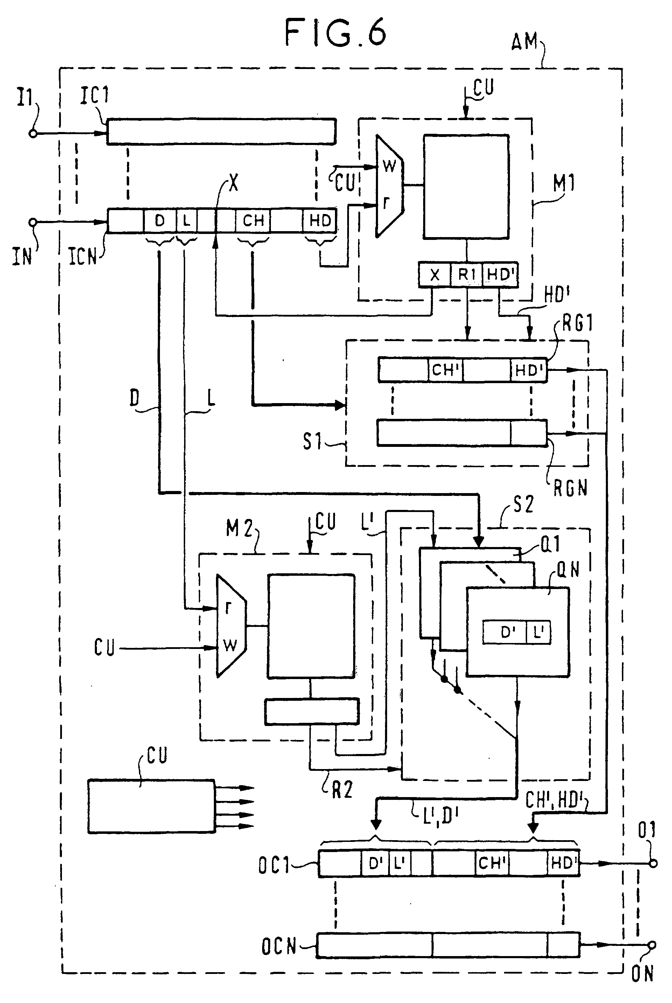

La réalisation des matrices d'entrée IM₁,...,IM_{P} et des matrices de sortie OM₁,...,OM_{P} sera décrite plus loin en se référant à la figure 6.

La figure 4 illustre le fonctionnement de ce premier mode de réalisation par un exemple dans lequel :
- un terminal d'usager T1, relié au terminal de réseau optique ONU1, émet une cellule CL10 contenant des informations (échantillons de circuit téléphonique ou micropaquets de données) à destination d'un terminal d'usager A;
- un terminal d'usager T2, relié au terminal de réseau optique ONU1, émet une cellule CL11 contenant des informations à destination d'un terminal d'usager B;
- et un terminal d'usager T3, relié au terminal de réseau optique ONU3, émet une cellule CL12 contenant des informations à destination d'un terminal d'usager C.

Les terminaux d'usagers A et C sont tous les deux reliés au terminal de réseau optique ONU'1, alors que le terminal d'usager B est relié à un terminal de réseau optique ONU'2. Les terminaux d'usagers A, B, C étant reliés à une même matrice de sortie OM1, il est possible de rassembler dans un même conteneur des informations qui sont destinées à ces trois terminaux d'usagers, et il est possible de traiter ce conteneur comme une seule entité jusqu'à la matrice sortie OM1. Cette matrice OM1 a pour fonction de router différemment, respectivement vers des liaisons de sortie OL1 et OL2, les informations destinées respectivement aux terminaux d'usagers A et C d'une part, et au terminal d'usager B d'autre part. Le réseau de commutation SN a pour fonction de router les conteneurs, constitués chacun de deux cellules dans cet exemple, en routant individuellement chacune de ces deux cellules selon un même chemin, sans savoir que ces deux cellules constituent un conteneur.

Dans cet exemple, le terminal de réseau optique ONU1 forme une cellule composite CL13 contenant à la fois les informations à destination de A et celles à destination de B. Le terminal de réseau optique ONU3 retransmet la cellule CL12 sans modifier sa charge utile. La matrice d'entrée IM1 forme un conteneur CT6, constitué de deux cellules successives CL14 et CL15, en y plaçant toutes les informations devant transiter par la matrice de sortie OM1 avant d'arriver à leurs destinations respectives. Les informations destinées à A, B, C sont donc placées dans ce conteneur CT6. Le réseau SN achemine les deux cellules CL14 et CL15 jusqu'à une sortie quelconque, de ce réseau SN, reliée à une entrée de la matrice OM1.

La matrice OM1 décompose le conteneur CT6 et place les informations qu'il contient dans deux cellules CL16 et CL17 destinées respectivement aux terminaux de réseau optique ONU'1 et ONU'2. La cellule CL16 est une cellule composite contenant des informations destinées à, et des informations destinées à B. La cellule CL17 est une cellule qui ne contient que des informations destinées à C. Le terminal de réseau optique ONU'2 retransmet la cellule CL17 au terminal d'usager B sans modifier sa charge utile. Le terminal ONU'1 décompose la cellule composite CL16 en deux cellules CL18 et CL19 qui ne contiennent, respectivement, que les informations destinées à et que les informations destinées à C.

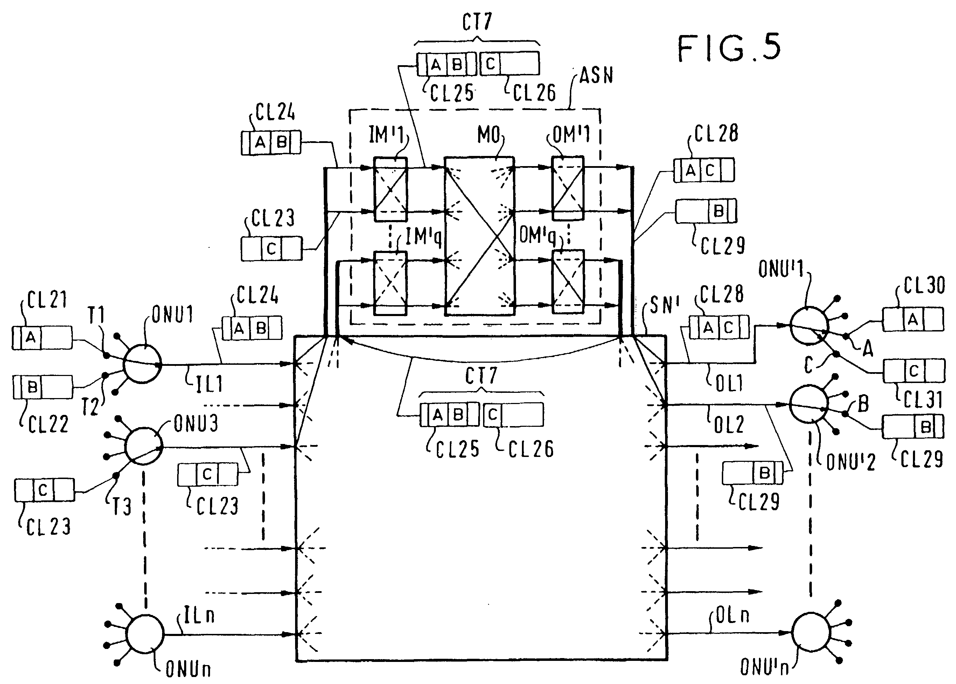

La figure 5 représente le schéma synoptique d'un second mode de réalisation du noeud de commutation selon l'invention. Ce second mode comporte :
- n liaisons d'entrée IL1,...,ILn reliées à des terminaux de réseau optique ONU1,...,ONUn, et n liaisons de sortie OL1,...,OLn reliées respectivement à n terminaux de réseau optique ONU'1,...,ONU'n;
- un réseau de commutation ATM classique, référencé SN', ayant n entrées principales, n sorties principales, n entrées auxiliaires, et n sorties auxiliaires;
- un autre réseau de commutations ATM, appelé réseau auxiliaire, et référencé ASN, comportant n entrées reliées respectivement aux n sorties auxiliaires du réseau SN' et n sorties reliées respectivement aux n entrées auxiliaires du réseau SN'.

Dans cet exemple, le réseau auxiliaire ASN comporte :
- une matrice de commutation ATM classique, référencée M0, comportant n entrées et n sorties;
- q matrices d'entrée IM'1,...,IM'q ayant chacune deux entrées et deux sorties, dans cet exemple qui est simplifié;
- q matrices de sortie OM'1,...,OM'q ayant chacune deux entrées et deux sorties, dans cet exemple qui est simplifié.

Les entrées des matrices IM'1,...,IM'q constituent les n entrées du réseau ASN. Leurs sorties sont reliées respectivement aux n entrées de la matrice M0. Les n sorties de la matrice M0 sont reliées respectivement aux entrées des matrices de sortie OM'1,...,OM'q. Les sorties de ces matrices de sortie constituent respectivement les n sorties du réseau ASN. La réalisation des matrices d'entrée IM'1,...,IM'q et des matrices des sortie OM'1,...,OM'q sera décrite plus loin en se référant à la figure 6.

La figure 5 illustre le fonctionnement de ce second mode de réalisation en représentant le cas où :
- un terminal d'usager T1, relié au terminal de réseau optique ONU1, émet une cellule CL21 contenant des informations destinées à un terminal d'usager A;
- un terminal d'usager T2, relié au terminal de réseau optique ONU1, émet une cellule CL22 contenant des informations à destination d'un terminal d'usager B;
- et un terminal d'usager T3 relié au terminal de réseau optique ONU3, émet une cellule CL23 contenant des informations à destination d'un terminal d'usager C.

Les terminaux d'usager A et C sont reliés au même terminal de réseau optique ONU'1, alors que le terminal d'usager B est relié au terminal de réseau optique ONU'2. Il est possible de rassembler dans un même conteneur les informations destinées à A, B, et C pendant les majeure partie du chemin, le réseau SN' pouvant au dernier moment décomposer le conteneur et router les informations vers leurs destinations respectives.

Le terminal de réseau optique ONU1 forme une cellule composite CL24 en rassemblant les informations destinées aux terminaux d'usager A et 3. Le terminal de réseau optique ONU3 retransmet la cellule CL23 sans modifier sa charge utile. Le réseau SN' intervient une première fois pour acheminer les cellules CL24 et CL23 vers deux entrées du réseau auxiliaire ASN, ces deux entrées correspondant à une même matrice d'entrée IM'l, pour permettre à celle-ci de former un conteneur CT7 contenant à la fois des informations devant transiter par le terminal de réseau optique ONU'1 et des informations devant transiter par le terminal de réseau optique ONU'2. Le conteneur CT7 est constitué de deux cellules consécutives CL25 et CL26. La cellule CL25 transporte des informations destinées au terminal A, et des informations destinées au terminal B. La cellule CL26 transporte des informations destinées au terminal C. La cellule CL25 transporte des informations destinées au terminal A, et des informations destinées au terminal B. La cellule CL26 transporte des informations destinées au terminal C. Ce conteneur CT7 est acheminée par la matrice M0 et une matrice de sortie, OM'q par exemple, jusqu'à une entrée auxiliaire du réseau SN'. Ce dernier intervient alors une deuxième fois, pour router identiquement les deux cellules CL25 et CL26 constituant le conteneur CT7, jusqu'à une sortie auxiliaire de ce réseau SN', qui est reliée à une entrée du réseau auxiliaire ASN correspondant, par exemple, à la matrice d'entrée IM'q.

La matrice IM'q et la matrice MO routent le conteneur vers une matrice de sortie OM'1 qui a pour fonction de décomposer le conteneur CT7, en deux cellules CL28 et CL29 destinées à transiter respectivement par les terminaux de réseau optique ONU'1 et ONU'2 respectivement. La cellule CL28 est une cellule composite qui contient les informations destinées à A et les informations destinées à C. La cellule CL29 contient les informations destinées à B. Le réseau SN' intervient ensuite une troisième fois, pour router ces deux cellules respectivement vers deux liaisons OL1 et OL2 pouvant les acheminer respectivement vers les terminaux de réseau ONU'1 d'une part et ONU'2 d'autre part. Le terminal ONU'1 décompose la cellule composite CL28 en deux cellules CL30 et CL31 qui ne contiennent respectivement que les informations destinées à A et que les informations destinées à C. Le terminal ONU'2 retransmet la cellule CL29 au terminal d'usager B sans modifier sa charge utile.

Il est à remarquer les informations destinées à A, B, C ont transité trois fois dans le réseau SN' alors que dans le mode de réalisation représenté sur la figure 4 elles ne transitent qu'une seule fois. Le second mode de réalisation consomme donc plus de ressources de commutation. Cependant le second mode de réalisation présente l'avantage d'être plus fiable car la structure du réseau ASN qui est, en quelque sorte, parallèle à la structure du réseau SN' permet de remédier à certaines pannes pouvant survenir dans le réseau ASN, alors que dans le premier mode de réalisation il n'est pas possible de remédier à une panne ayant lieu dans l'une des matrices d'entrée IM1,...,IMp, ou dans l'une des matrices de sortie OM1,...,OMp.

La figure 6 représente le schéma synoptique d'une matrice AM pouvant constituer l'une des matrices IM1,..., IMp,OM1,...,OMp, IM'1,...,OM'q,OM'1,...,OM'q utilisées dans les exemples de réalisation représentés sur les figures 4 et 5. Cette matrice AM comporte :
- N entrées I1,...,IN;
- N circuits d'entrée IC1,...,ICN; ayant chacun une entrée reliée respectivement à l'une des entrées I1,...,IN;
- une première mémoire de marquage M1, dédiée au routage des échantillons de circuit téléphonique synchrone;
- un premier commutateur spatial S1, dédié aux échantillons de circuit téléphonique synchrone;
- une seconde mémoire de marquage M2, dédiée au routage des micropaquets de données;
- un second commutateur spatial S2, dédié aux micropaquets de données;
- N circuits de sortie CC1,...,OCN;
- N sorties O1,...,ON, reliées respectivement chacune à une sortie de l'un des circuits de sortie OC1,...,OCN;
- et une unité de commande CU commandant chacun des sous-ensembles de cette matrice AM.

Chaque circuit d'entrée IC1,...,ICN comporte un registre permettant de stocker une cellule reçue par une borne d'entrée, respectivement I1,...,IN. Cette cellule est reçue sous forme série et est mémorisée sous la commande d'un signal d'horloge, non représenté, fourni par l'unité de commande CU.

La mémoire de marquage M1 comporte une entrée d'adresse d'écriture couplée à une sortie de l'unité de commande CU, et une entrée d'adresse de lecture, couplée à une sortie de chacun des circuits d'entrée IC1,...,ICN, pour recevoir une en-tête HD de cellule. Une entrée de données de la mémoire M1 est reliée à une sortie de l'unité de commande CU. Le contenu de la mémoire de marquage M1 est fourni par l'unité de commande CU et est inscrit sous la commande de l'unité de commande CU lors de l'établissement des appels.

Chaque voie logique aboutissant à l'une des entrées I1,...,IN est repérée par un identificateur de faisceau virtuel et un identificateur de circuit virtuel, qui sont contenus dans l'en-tête HD de chaque cellule supportant cette voie logique. Pour chaque voie logique entrante, la mémoire de marquage M1 contient sur une même ligne :
- les identificateurs des circuits téléphoniques synchrones portés par cette voie logique entrante, ces identificateurs indiquant les positions de ces échantillons dans une cellule entrante;
- l'identificateur d'une voie logique sortante, l'identificateur d'une sortie O1,...,ON, et des identificateurs indiquant les positions attribuées aux échantillons de circuit téléphonique dans chaque cellule sortante supportant cette voie logique;
- et l'indication de la position X au-delà de laquelle le contenu d'une cellule entrante transporte des micropaquets de données, chaque cellule comportant une première partie ne contenant que des échantillons de circuit téléphonique synchrone, et une seconde partie ne contenant que des micropaquets de données, cette position étant variable d'une cellule à une autre.

Ces informations sont fournies à l'unité de commande CU par des liaisons de signalisation non représentées.

Une première sortie de données de la mémoire M1 est reliée à une entrée commune des circuits d'entrée IC1,...,ICN pour leur fournir l'indication X de la position au-delà de laquelle la charge utile d'une cellule transporte des micropaquets. Une deuxième sortie de données de la mémoire M1 est reliée à une entrée de commande du commutateur spatial S1 pour lui fournir des informations de routage R1 constituées de l'identité d'une des sorties O1,...,ON de la matrice AM, et d'identificateurs repérant les positions des échantillons de circuit téléphonique synchrone dans chaque cellule de la voie logique sortante. Une troisième sortie de données de la mémoire M1 est reliée à une entrée du commutateur spatial S1 pour lui fournir une en-tête HD' constituée essentiellement des identificateurs de la voie logique sortante.

Le commutateur S1 comporte N registres RG1,...,RGN pour mémoriser respectivement la partie d'une cellule dédiée aux échantillons de circuit téléphonique synchrone, respectivement pour les N sorties O1,...,ON; et pour mémoriser l'en-tête HD' de chaque cellule qui transportera ces échantillons. Le commutateur S1 a pour fonction de commuter spatialement vers l'un des circuits de sortie OC1,...,OCN, les échantillons de circuit téléphonique synchrone contenus dans la première partie de chacune des cellules entrantes.

Chaque cellule entrante est mémorisée dans l'un des circuits d'entrée IC1,...,ICN, pendant la durée nécessaire à la commutation des différentes informations qu'elle contient. Le contenu de l'en-tête HD de chaque cellule reçue est fourni par ce circuit d'entrée à l'entrée d'adresse de lecture de la mémoire de marquage M1. Une lecture dans la mémoire de marquage M1, à cette adresse, fournit des informations de routage R1 à l'entrée de commande du commutateur spatial S1, pour qu'il mémorise, dans chacun des registres RG1,...,RGN, des échantillons destinés respectivement aux circuits de sortie OC1,...,OCN. Ils sont mémorisés dans ces registres à des positions correspondant à celles qu'ils occuperont dans une cellule sortante. La lecture dans la mémoire M1 fournit aussi l'en-tête HD' d'une cellule sortante. Cette en-tête est mémorisée aussi dans l'un des registres RG1,...,RGN. Puis le contenu de chaque registre RG1,...,RGN est transféré vers l'un des circuits de sortie OC1,...,OCN qui l'insère dans une cellule sortante.

La mémoire de marquage M1 fournit aussi au circuit d'entrée IC1,...,ICN l'indication X de la position au delà de laquelle le contenu de la cellule entrante porte des micropaquets de données. Chaque circuit d'entrée IC1,...,ICN connaît ainsi la position X à partir de laquelle il peut commencer la lecture des micropaquets de données.

La mémoire de marquage M2 est dédiée au routage de ces micropaquets. Elle comporte : une entrée de données reliée à une sortie de l'unité de commande CU, une entrée d'adresse d'écriture reliée à une sortie de l'unité de commande CU, une entrée d'adresse de lecture reliée à une sortie commune des circuits d'entrée IC1,...,ICN, et deux sorties de données reliées respectivement à deux entrées du commutateur spatial S2. La mémoire de marquage M2 contient des informations de routage R2 constitués d'une identité repérant l'une des sorties C1,...,ON, de la matrice AM, et contient une nouvelle étiquette L' pour chaque micropaquet de données.

Une sortie des circuits d'entrée IC1,...,ICN est reliée à une entrée du commutateur spatial S2 pour lui fournir les données D contenues dans chaque micropaquet de données. Une autre sortie des circuits d'entrée IC1,...,ICN est reliée à une entrée d'adresse de lecture de la mémoire de marquage M2 pour lui fournir l'étiquette L de chaque micropaquet de données. Quand un micropaquet de données est lu dans un circuit d'entrée, la mémoire de marquage M2 est lue à l'adresse L. Une sortie de la mémoire de marquage M2 fournit une nouvelle étiquette L' pour ce paquet de données, à une entrée du commutateur spatial S2. Ce dernier mémorise chaque micropaquet de données, constitué d'une nouvelle étiquette L' et des données D, dans une file d'attente Q1,...,QN correspondant respectivement à l'un des circuits de sortie OC1,...,OCN. Ces files d'attente Q1,...,QN permettent de régler les problèmes de contention dus à l'arrivée asynchrone des micropaquets de données destinés à une même sortie O1,...,ON. Ces files d'attente sont gérées de manière classique.

La sortie de chaque file d'attente Q1,...,QN du commutateur spatial S2 est reliée respectivement à une entrée d'un circuit de sortie OC1,...,OCN pour lui fournir des micropaquets de données constitué chacun d'une nouvelle étiquette L', et de données D. Une lecture dans les circuits de sortie OC1,...,OCN est commandée périodiquement par le circuit de commande CU, au moyen d'une liaison non représentée. La cellule lue ainsi dans chaque circuit de sortie est fournie sous forme série à la sortie O1,...,ON correspondant à ce circuit de sortie.

## Revendications

1. Procédé de multiplexage dans un réseau de télécommunication à mode de transfert asynchrone, pour multiplexer temporellement des informations dans des cellules (CL1, CL2, CL3) à mode de transfert asynchrone et à longueur fixe, chaque cellule comportant :
- une en-tête (HD1 ;...; HD7) contenant notamment un identificateur de faisceau virtuel et un identificateur de circuit virtuel qui définissent une voie logique entre deux noeuds dudit réseau;
- et une charge utile (PL1 ;...; PL7) constituée d'une quantité fixe d'information ;
consistant, avant de router des informations dans ce noeud, à placer comme charge utile dans une suite de cellules (CL1, CL2, CL3, ...) supportant une même voie logique, une suite d'entités logiques appelées conteneurs d'information (CT1, CT2, CT3, ...) supportant cette même voie logique, chaque conteneur comportant une charge utile (LD1, LD2, LD3, ...) qui est une quantité d'information supérieure à celle de la charge utile (PL1, PL2, PL3, ...) de chaque cellule, la quantité d'information transportée par chaque conteneur étant choisie telle que l'utilisation de ce noeud est plus efficace ;
**caractérisé en ce que** pour transmettre des données ayant des destinations différentes, il consiste à placer dans une suite de conteneurs (CT4, CT5) supportant une voie logique donnée, une pluralité de paquets de données (PK1, ..., PK6), chaque paquet comportant une étiquette (L1, ..., L6) qui contient une référence logique permettant d'acheminer indépendamment chaque paquet,et la longueur de ce paquet.

2. Procédé selon la revendication 1, **caractérisé en ce que** pour transmettre en outre des échantillons d'une pluralité de signaux appartenant à des circuits différents, il consiste en outre à placer dans une suite de conteneurs (CT4, CT5) supportant une voie logique donnée, et ayant chacun une longueur fixée, des échantillons (CH1, CH1'; CH2, CH2'; CH3, CH3') correspondant respectivement à ces circuits, chaque échantillon (CH2) étant repérable à l'intérieur d'un conteneur (CT4) par sa position dans ce conteneur.

3. Procédé selon la revendication 2, **caractérisé en ce que** la position de tous les échantillons (CH2, CH2') d'un circuit donné est fixée pour toute la durée de ce circuit.

4. Procédé selon la revendication 2, **caractérisé en ce que** la position des échantillons (CH2, CH2') d'un circuit donné est variable pendant la durée de ce circuit ; et **en ce que** des primitives d'un protocole de changement de position des échantillons sont transportées dans des conteneurs.

5. Procédé selon la revendication 1, **caractérisé en ce que** le début de chaque conteneur (CT1,...) est repéré par un drapeau (F1, F2, F3, ...,) prédéterminé.

6. Procédé selon la revendication 1, **caractérisé en ce que** la longueur des conteneurs transmis sur une liaison donnée est susceptible de varier ; et **en ce que** des primitives d'un protocole de changement de longueur de conteneur sont transmises dans la charge utile d'un conteneur, avant de procéder à un changement de longueur.

7. Noeud de commutation, mettant en oeuvre le procédé selon 1a revendication 1, comportant :
- un premier étage comportant au moins une matrice de commutation dite auxiliaire (IM1, ..., IMp) pour regrouper dans une même entité logique (CT6), appelée conteneur, des informations reçues par ce noeud et contenues dans différentes cellules, ces informations comportant des paquets de données pouvant être acheminées par un même chemin pendant au moins une partie de leur acheminement dans ledit noeud ; chaque conteneur étant transporté par une pluralité de cellules supportant une même voie logique et transportant une quantité d'information supérieure à celle de la charge utile de chaque cellule, la quantité d'information transportée par chaque conteneur étant choisie telle que l'utilisation de ce noeud est plus efficace ;
- au moins un étage intermédiaire classique (SN) de commutation de cellules, ayant des entrées couplées à des sorties du premier étage;
- un dernier étage comportant au moins une matrice de commutation dite auxiliaire (OM1, ..., OMp) pour placer dans des cellules distinctes (CL16, CL17) supportant respectivement des voies logiques distinctes, des informations qui ont été transportées dans une même cellule (CL14), parce qu'elles avaient été regroupées dans un même conteneur (CT6) ;
**caractérisé en ce qu'**il comporte au moins une matrice auxiliaire de commutation (IM1,..., IMp ; OM1,..., OMp) comportant :
- une première mémoire de marquage (M2), dédiée au routage de paquets de données, contenant des informations de routage (R2) comportant une identité repérant l'une des sorties (O1,...,ON) de la matrice auxiliaire, et contenant une nouvelle étiquette (L'), pour chaque micropaquet de données;
- et un premier commutateur spatial (S2), commandé en fonction de données de routage mémorisées dans la première mémoire de marquage (M2) pour placer des paquets de données dans une cellule, en associant à chaque paquet de données respectivement une nouvelle étiquette (L')fournie par la première mémoire de marquage (M2), et pour fournir cette cellule à une sortie de cette matrice auxiliaire, cette sortie étant repèrée par une identité fournie par la première mémoire de marquage (M2).

8. Noeud de commutation, selon la revendication 7, caractérisé en ce chaque matrice auxiliaire de commutation (IM1,..., IMp ; OM1,..., OMp) comporte en outre :
- une seconde mémoire de marquage (M1), dédiée au routage d'échantillons de circuit synchrone ;
- et un second commutateur spatial (S1), commandé en fonction de données mémorisées dans la seconde mémoire de marquage pour placer des échantillons de circuits synchrone dans une cellule.

9. Noeud de commutation, mettant en oeuvre le procédé selon la revendication 1, comportant :
- un réseau principal (SN') de commutation de cellules, ayant des entrées principales constituant les entrées dudit noeud, et des sorties principales constituant les sorties dudit noeud;
- et au moins un réseau auxiliaire (ASN) de commutation de cellules, ayant des entrées reliées respectivement à des sorties auxiliaires du réseau principal, et des sorties reliées respectivement à des entrées auxiliaires du réseau principal, pour :
-- regrouper dans une même entité logique (CT7) appelée conteneur et ayant une capacité supérieure à la charge utile d'une cellule, des informations contenues dans différentes cellules (CL23, CL24), ces informations comportant des paquets de données et pouvant être acheminées par un même chemin pendant au moins une partie de leur acheminement dans ledit noeud, et chaque conteneur étant transporté par une pluralité de cellules supportant une même voie logique;
-- et placer dans des cellules distinctes (CL28, CL29) supportant respectivement des voies logiques distinctes, des informations qui ont été transportées dans une même cellule (CL25), parce qu'elle avaient été regroupées dans un même conteneur (CT7) ;
**caractérisé en ce qu'**il comporte au moins une matrice auxiliaire de commutation (IM'1,..., IM'p ; OM'1,..., OM'p) comportant :
- une première mémoire de marquage (M2), dédiée au routage de paquets de données, contenant des informations de routage (R2) comportant une identité repérant l'une des sorties (O1,...,ON) de la matrice auxiliaire, et contenant une nouvelle étiquette (L'), pour chaque micropaquet de données;
- et un premier commutateur spatial (S2), commandé en fonction de données de routage mémorisées dans la première mémoire de marquage (M2) pour placer des paquets de données dans une cellule, en associant à chaque paquet de données respectivement une nouvelle étiquette (L')fournie par la première mémoire de marquage (M2), et pour fournir cette cellule à une sortie de cette matrice auxiliaire, cette sortie étant repèrée par une identité fournie par la première mémoire de marquage (M2).

10. Noeud de commutation selon la revendication 9, **caractérisé en ce que** chaque matrice auxiliaire de commutation (IM'1,..., IM'p ; OM'1,..., OM'p) comporte en outre :
- une seconde mémoire de marquage (M1), dédiée au routage d'échantillons de circuit synchrone ;
- un second commutateur spatial (S1), commandé en fonction de données mémorisées dans la première mémoire de marquage pour placer des échantillons de circuits synchrone dans une cellule.

11. Noeud de commutation selon l'une des revendications 8 ou 10, **caractérisé en ce qu'**il comporte en outre :
- pour l'optimisation des ressources au sein d'un conteneur à émettre, des moyens (CU) pour attribuer une position à chaque échantillon de circuit dans ce conteneur, modifier en conséquence le contenu de la seconde matrice de marquage (M1), et placer dans ce conteneur des primitives d'un protocole de changement de position des échantillons de circuit, pour tous les circuits établis ;
- et des moyens (CU) pour, à la réception d'un conteneur, interpréter des primitives transportées par ce conteneur et indiquant des changements de position, pour déterminer les positions des échantillons transportés dans ce conteneur, et mettre à jour en conséquence la seconde mémoire de marquage (M1).

## Patentansprüche

1. Multiplexverfahren in einem ATM-Telekommunikationsnetz, um ein Zeitmultiplexing von Informationen in ATM-Zellen (CL1, CL2, CL3) von fester Länge durchzuführen, wobei jede Zelle aufweist:
- einen Header (HD1; ...; HD7), der insbesondere eine virtuelle Pfadkennung und eine virtuelle Verbindungskennung enthält, die einen logischen Kanal zwischen zwei Knoten dieses Netzes definieren;
- und eine Nutzlast (PL1; ...; PL7), die aus einer festen Informationsmenge besteht;
darin bestehend, dass vor dem Routing der Informationen in diesem Knoten in eine Folge von Zellen (CL1, CL2, CL3, ...), die als Träger desselben logischen Kanals dienen, als Nutzlast eine Folge von logischen Einheiten platziert wird, die als Datencontainer (CT1, CT2, CT3, ...) bezeichnet werden, welche als Träger eben dieses logischen Kanals dienen, wobei jeder Container eine Nutzlast (LD1, LD2, LD3, ...) aufweist, die eine größere Datenmenge als jene der Nutzlast (PL1, PL2, PL3, ...) jeder einzelnen Zelle ist, und wobei die von jedem Container transportierte Datenmenge so gewählt wird, dass die Nutzung dieses Knotens effizienter ist;
**dadurch gekennzeichnet, dass** das Verfahren zum Übertragen von Daten mit unterschiedlichen Zielen darin besteht, in eine Folge von Containern (CT4, CT5), die einen gegebenen logischen Kanal unterstützen, eine Vielzahl von Datenpaketen (PK1, ..., PK6) zu platzieren, wobei jedes Paket ein Etikett (L1, ..., L6) aufweist, das einen logischen Verweis enthält, mit dem jedes Paket unabhängig geleitet werden kann, sowie die Länge dieses Pakets.

2. Verfahren nach Anspruch 1, **dadurch gekennzeichnet, dass** es, um darüber hinaus Abtastwerte einer Vielzahl von Signalen zu übertragen, die zu unterschiedlichen Verbindungen gehören, außerdem darin besteht, dass in eine Folge von Containern (CT4, CT5), die einen gegebenen logischen Kanal unterstützen und von denen jeder eine feste Länge hat, Abtastwerte (CH1, CH1'; CH2, CH2'; CH3, CH3') platziert werden, die jeweils diesen Verbindungen entsprechen, wobei jeder Abtastwert im Inneren eines Containers (CT4) durch seine Position in diesem Container markiert werden kann.

3. Verfahren nach Anspruch 2, **dadurch gekennzeichnet, dass** die Position aller Abtastwerte (CH2, CH2') einer gegebenen Verbindung für die gesamte Dauer dieser Verbindung fest ist.

4. Verfahren nach Anspruch 2, **dadurch gekennzeichnet, dass** die Position der Abtastwerte (CH2, CH2') einer gegebenen Verbindung während der Dauer dieser Verbindung variabel ist; und dadurch, das Primitive eines Positionsänderungsprotokolls der Abtastwerte in Containern transportiert werden.

5. Verfahren nach Anspruch 1, **dadurch gekennzeichnet, dass** der Anfang jedes Containers (CT1, ...) durch ein zuvor festgelegtes Flag (F1, F2, F3, ...) markiert ist.

6. Verfahren nach Anspruch 1, **dadurch gekennzeichnet, dass** die Länge der Container, die auf einer gegebenen Verbindung übertragen werden, variiert werden kann; sowie dadurch, dass Primitive eines Containerlängen-Änderungsprotokolls in der Nutzlast eines Containers übertragen werden, bevor eine Längenänderung vorgenommen wird.

7. Vermittlungsknoten, der das Verfahren nach Anspruch 1 umsetzt, aufweisend:
- eine erste Stufe, die mindestens eine sogenannte Hilfs-Schaltmatrix (IM1, ..., IMp) aufweist, um in einer als Container bezeichneten logischen Einheit (CT6) Informationen in Gruppen zusammenzufassen, die von diesem Knoten empfangen wurden und in verschiedenen Zellen enthalten sind, wobei diese Informationen Datenpakete aufweisen, die zumindest während eines Teils ihrer Leitweglenkung in dem Knoten über denselben logischen Kanal geleitet werden können; hierbei wird jeder Container von einer Vielzahl von Zellen transportiert, die denselben logischen Kanal unterstützen und eine Informationsmenge transportieren, die größer ist als diejenige der Nutzlast jeder einzelnen Zelle, wobei die von jedem Container transportierte Informationsmenge so gewählt wird, dass die Nutzung dieses Knotens effizienter ist;
- mindestens eine klassische Zwischenstufe (SN) zur Zellenvermittlung, die mit Ausgängen der ersten Stufe gekoppelte Eingänge aufweist;
- eine letzte Stufe, die mindestens eine sogenannte Hilfs-Schaltmatrix (OM1, ..., OMp) aufweist, um in unterschiedlichen Zellen (CL16, CL17), die jeweils verschiedene logische Kanäle unterstützen, Informationen zu platzieren, die in derselben Zelle (CL14) transportiert wurden, weil sie im selben Container (CT6) zusammengefasst waren;
**dadurch gekennzeichnet, dass** er mindestens eine Hilfs-Schaltmatrix (IM1, ..., IMp; OM1, ... IMp) aufweist, aufweisend:
- einen ersten Markierungsspeicher (M2), der für das Routing von Datenpaketen reserviert ist, die Routing-Informationen (R2) enthalten und die eine Identität aufweisen, mit der einer der Ausgänge (O1, ..., ON) der Hilfsmatrix markiert wird, und die für jedes Daten-Mikropaket ein neues Etikett (L') enthalten;
- und eine erste räumliche Vermittlungseinrichtung (S2), die in Abhängigkeit von im ersten Markierungsspeicher (M2) gespeicherten Routing-Daten gesteuert wird, um Datenpakete in eine Zelle zu platzieren, indem jedem Datenpaket jeweils ein neues vom ersten Markierungsspeicher (M2) geliefertes Etikett (L') zugewiesen wird, und um diese Zelle an einen Ausgang dieser Hilfsmatrix zu liefern, wobei dieser Ausgang durch eine vom ersten Markierungsspeicher (M2) gelieferte Identität markiert ist.

8. Vermittlungsknoten nach Anspruch 7, **dadurch gekennzeichnet, dass** jede Hilfs-Schaltmatrix (IM1, ..., IMp; OM1, ..., OMp) außerdem aufweist:
- einen zweiten Markierungsspeicher (M1), der für das Routing von Abtastwerten synchroner Verbindungen reserviert ist;
- und eine zweite räumliche Vermittlungseinrichtung (S1), die in Abhängigkeit von im zweiten Markierungsspeicher gespeicherten Daten gesteuert wird, um Abtastwerte synchroner Verbindungen in einer Zelle zu platzieren.

9. Vermittlungsknoten zur Umsetzung des Verfahrens nach Anspruch 1, aufweisend:
- ein Haupt-Zellenvermittlungsnetz (SN'), das Haupteingänge besitzt, welche die Eingänge dieses Knotens bilden, sowie Hauptausgänge, welche die Ausgänge dieses Knotens bilden;
- und mindestens ein Hilfs-Zellenvermittlungsnetz (ASN), das Eingänge besitzt, die jeweils mit Hilfsausgängen des Hauptnetzes verbunden sind, sowie Ausgänge, die jeweils mit den Hilfseingängen des Hauptnetzes verbunden sind, um:
-- in derselben als Container bezeichneten logischen Einheit (CT7), die eine höhere Kapazität als die Nutzlast einer Zelle hat, Informationen in Gruppen zusammenzufassen, die in verschiedenen Zellen (CL23, CL24) enthalten sind, wobei diese Informationen Datenpakete aufweisen und zumindest während eines Teils ihrer Leitweglenkung in diesem Knoten über denselben Weg geleitet werden können, und wobei jeder Container von einer Vielzahl von Zellen transportiert wird, die denselben logischen Kanal unterstützen;
-- und um in unterschiedliche Zellen (CL28, CL29), die jeweils unterschiedliche logische Kanäle unterstützen, Informationen zu platzieren, die in derselben Zelle (CL25) transportiert wurden, weil sie in demselben Container (CT7) zusammengefasst waren;
**dadurch gekennzeichnet, dass** er mindestens eine Hilfs-Schaltmatrix (IM'1, ..., IM'p; OM'1, ..., OM'p) aufweist, aufweisend:
- einen ersten Markierungsspeicher (M2), der für das Routing von Datenpaketen reserviert ist, die Routing-Informationen (R2) enthalten und die eine Identität aufweisen, mit der einer der Ausgänge (O1, ..., ON) der Hilfsmatrix markiert wird, und die für jedes Daten-Mikropaket ein neues Etikett (L') enthalten;
- und eine erste räumliche Vermittlungseinrichtung (S2), die in Abhängigkeit von im ersten Markierungsspeicher (M2) gespeicherten Routing-Daten gesteuert wird, um Datenpakete in eine Zelle zu platzieren, indem jedem Datenpaket jeweils ein neues vom ersten Markierungsspeicher (M2) geliefertes Etikett (L') zugewiesen wird, und um diese Zelle an einen Ausgang dieser Hilfsmatrix zu liefern, wobei dieser Ausgang durch eine vom ersten Markierungsspeicher (M2) gelieferte Identität markiert ist.

10. Vermittlungsknoten nach Anspruch 9, **dadurch gekennzeichnet, dass** jede Hilfs-Schaltmatrix (IM'1, ..., IMp'; OM'1, ..., OM'p) außerdem aufweist:
- einen zweiten Markierungsspeicher (M1), der für das Routing von Abtastwerten synchroner Verbindungen reserviert ist;
- und eine zweite räumliche Vermittlungseinrichtung (S1), die in Abhängigkeit von im ersten Markierungsspeicher gespeicherten Daten gesteuert wird, um Abtastwerte synchroner Verbindungen in einer Zelle zu platzieren.

11. Vermittlungsknoten nach einem der Ansprüche 8 oder 10, **dadurch gekennzeichnet, dass** er außerdem aufweist:
- zur Optimierung der Ressourcen innerhalb eines zu sendenden Containers Vorrichtungen (CU), um jedem Verbindungsabtastwert in diesem Container eine Position zuzuweisen, um den Inhalt der zweiten Markierungsmatrix (M1) entsprechend zu ändern, und um in diesen Container Primitive eines Positionsänderungsprotokolls der Verbindungsabtastwerte für alle aufgebauten Verbindungen zu platzieren;
- und Vorrichtungen (CU), um beim Empfang eines Containers Primitive zu interpretieren, die von diesem Container transportiert wurden und die Positionsänderungen angeben, um die Positionen der in diesem Container transportierten Abtastwerte zu bestimmen und den zweiten Markierungsspeicher (M1) entsprechend zu aktualisieren.

## Claims

1. A multiplexing process, in an asynchronous transfer mode telecommunication network, for time-division multiplexing data in asynchronous transfer mode cells (CL1, CL2, CL3) of fixed length, each cell including:
- a header (HD1; ...; HD7) containing a virtual circuit group identifier and a virtual circuit identifier that define a logical channel between two nodes of said network; and
- a payload (PL1; ...; PL7) made up of a fixed quantity of data;
wherein, before routing data in one of said nodes, a payload is placed in each of a series of cells (CL1, CL2, CL3, ...) supporting the same logical channel, a series of logical entities, referred to as data containers (CT1, CT2, CT3, ...), supporting the same logical channel, each container including a load (LD1, LD2, LD3, ...) that is a quantity of data greater than that of the payload (PL1, PL2, PL3, ...) of each cell, and the quantity of data conveyed by each container being chosen so that the use of said node is more efficient,
the process being **characterized in that** in order to send data to different destinations, there are placed in a series of containers (CT4, CT5) supporting a given logical channel: a plurality of data packets (PK1; ...; PK6) each including a label (L1; ...; L6) which contains a logical reference enabling each packet to be routed independently, and the length of said packet.

2. Process according to claim 1, **characterized in that** in order to further send samples of a plurality of signals belonging to different circuits, the process further consists in placing samples (CH1, CH1'; CH2, CH2'; CH3, CH3';) in a series of containers (CT4, CT5) supporting a given logical channel, each container having a fixed length, said samples (CH1, CH1'; CH2, CH2'; CH3, CH3') respectively corresponding to said circuits, and each sample (CH2) being identifiable within a container (CT4) by its position in said container.

3. Process according to claim 2, **characterized in that** the position of all the samples (CH2, CH2') from a given circuit is fixed for the entire duration of said circuit.

4. Process according to claim 2, **characterized in that** the position of the samples (CH2, CH2') from a given circuit is variable for the duration of said circuit, and **in that** sample position change protocol primitives are conveyed in containers.

5. Process according to claim 1, **characterized in that** the start of each container (CT1, ...) is identified by a predetermined flag (F1, F2, F3, ...).

6. Process according to claim 1, **characterized in that** the length of said containers transmitted over a given link is able to vary, and **in that** container length change protocol primitives are transmitted in the payload of a container before any change of length is effected.

7. A switching node for implementing the process according to claim 1, the switching node including:
- a first stage including at least one auxiliary switching matrix (IM1, ..., IMp) for grouping into the same logical entity or container (CT6) data received by said node and contained in different cells, said data including data packets being routed over the same path during at least part of their routing in said node, each container being conveyed by a plurality of cells supporting the same logical channel and conveying a quantity of data greater than that of the payload of each cell, the quantity of data conveyed by each container being chosen so that the use of said node is more efficient;
- at least one conventional intermediate cell switching stage (SN) having inputs coupled to outputs of said first stage;
- a final stage including at least one auxiliary switching matrix (OM 1, ..., OMp) for placing in separate cells (CL16, ..., CL17) respectively supporting separate logical channels data that has been conveyed in the same cell (CL14) because it had been grouped in the same container (CT6);
the switching node being **characterized in that** it includes at least one auxiliary switching matrix (IM1, ..., IMp; OM1, ..., OMp) including:
- a first marker memory (M2) dedicated to routing data packets, containing routing data (R2) including an identity marking one of the outputs (O1, ..., ON) of the auxiliary matrix, and containing a new label (L'), for each data micropacket; and
- a first space-division switch (S2) controlled by routing data stored in said first marker memory (M2) to place data packets in a cell, associating each data packet respectively with a new label (L') provided by the first marker memory (M2), and to provide said cell with an output of said auxiliary matrix, said outlet being marked by an identity provided by the first marker memory (M2).

8. The switching node according to claim 7, **characterized in that** each auxiliary switching matrix (IM1, ..., IMp; OM1, ..., OMp) further comprises:
- a second marker memory (M1) dedicated to routing synchronous circuit samples; and
- a second space-division switch (S1) controlled by data stored in said second marker memory to place synchronous circuit samples in a cell.

9. A switching node for implementing the process according to claim 1, the switching node including:
- a main cell switching network (SN') having main inputs constituting the inputs of said node and main outputs constituting the outputs of said node; and
- at least one auxiliary cell switching network (ASN) having inputs respectively connected to auxiliary outputs of said main network and outputs respectively connected to auxiliary inputs of said main network, in order to:
-- group in the same logical entity or container (CT7) having a capacity greater than the payload of a cell, data contained in different cells (CL23, CL24), said data including data packets and being routable over the same path for at least part of its routing in said node, and each container being conveyed by a plurality of cells supporting the same logical channel; and
-- place in separate cells (CL28, CL29) supporting respective different logical channels data conveyed in the same cell (CL25) because it was grouped in the same container (CT7);
the switching node being **characterized in that** it includes at least one auxiliary switching matrix (IM'1, ..., IM'p; OM'1, ..., OM'p) including:
- a first marker memory (M2) dedicated to routing data packets, containing routing data (R2) including an identity marking one of the outputs (01, ..., 0N) of the auxiliary matrix, and containing a new label (L'), for each data micropacket; and
- a first space-division switch (S2) controlled by routing data stored in said first marker memory (M2) to place data packets in a cell, associating each data packet respectively with a new label (L') provided by the first marker memory (M2), and to provide said cell with an output of said auxiliary matrix, said outlet being marked by an identity provided by the first marker memory (M2).

10. The switching node according to claim 9, **characterized in that** each auxiliary switching matrix (IM'1, ..., IM'p; OM'1, ..., OM'p) further comprises:
- a second marker memory (M1) dedicated to routing synchronous circuit samples; and
- a second space-division switch (S1) controlled by data stored in said first marker memory to place synchronous circuit samples in a cell.

11. The switching node according to claim 8 or claim 10, **characterized in that** it further comprises:
- for optimizing resources within a container to be sent, means (CU) for assigning each circuit sample a position in said container, modifying the content of the second marker memory (M1) accordingly and placing circuit sample position change protocol primitives in said container for all the circuits set up; and
- means (CU) for, on receipt of a container, interpreting primitives conveyed by said container and indicating position changes, to determine the positions of the samples conveyed in said container, and updating accordingly said second marker memory (M1).
